# EUROPEAN PATENT SPECIFICATION

(11) **EP 1 176 514 B1**
(45) Date of publication and mention of the grant of the patent: **24.02.2010**
(21) Application number: 00115028.3
(22) Date of filing: 25.07.2000
(51) Int. Cl.: G06F 13/40

(54) **Hot swap processor card and bus**
Unter-Spannung-austauschbare Prozessorkarte und Bus
Carte processeur échangeable sous tension et bus

(43) Date of publication of application: 30.01.2002
(73) Proprietor: Nexcom International Co., Ltd., Chung-Ho City Taipei Hsien 235 (TW)
(72) Inventor: Chen, Hsiang-Chan, Nexcom International Co. Ltd., San-Chung City, Taipei Hsien R.O.C. (TW); Tung, Hui-Guo, Nexcom International Co. Ltd., San-Chung City, Taipei Hsien R.O.C. (TW)
(74) Representative: Lieck, Hans-Peter

(56) References cited:
- US-A- 5 781 767
- US-A- 5 983 298
- CHILD: "CompactPCI Community Tackles The Complexities of Hot Swap" ELECTRONIC DESIGN., 13 May 1998 (1998-05-13), page 109-110,112-114 XP000833704 PENTON PUBLISHING, CLEVELAND, OH., US ISSN: 0013-4872

## Description

The present invention relates to a processor card according to the pre-characterizing clause of claim 1 and a bus equipped with two such processor cards.

In many fields, such as in telecommunications and network servers, computing equipment downtime is simply unacceptable. Nevertheless, failures occur and to ensure that the downtime is kept to an absolute minimum, certain design techniques have been adopted. For example, motherboard design concepts have been abandoned for a passive backplane architecture. A passive backplane is simply a circuit board with an absolute minimum amount of circuitry, with slots into which other circuit boards are plugged. Since a passive backplane has, ideally, no circuitry on it, its mean time between failures (MTBF) is considerably longer than of a motherboard. An appropriately designed processor card plugs into its processor slot on the backplane. Similarly, add-on cards plug into their add-on-card slots on the backplane. In this manner, via traces on the backplane, the processor and its associated bus circuitry are connected to the add-on cards.

When either an add-on card or a processor card fails, the card is simply unplugged from the passive backplane and a replacement is inserted. The entire process is relatively quick and easy, which would not be the case if a motherboard architecture had been adopted and it were the motherboard itself that has failed. The catastrophic equivalent of this, using a passive backplane architecture, is the backplane itself failing. This, however, is highly unlikely as the passive backplane has no active onboard circuitry.

Although the above swapping technique is quite quick, it used to be necessary that any card, processor or add-on, be cold swapped. That is, the computing equipment had to be powered down, and then the card could be removed and replaced. Unfortunately, powering down such equipment, and powering it back up, forced the entire device to go offline when, perhaps, only a relatively minor card needed to be replaced. Furthermore, powering up the computing equipment often entails a relatively lengthy booting procedure before the equipment comes back online. Consequently, hot swapping techniques were developed. Such techniques enable an add-on card to be swapped from the bus without powering down the computing device. The other elements, the processor card and properly functioning add-on cards, could continue to operate and thus continue to provide a service, albeit with a reduced functionality. With the defective card replaced and brought back online, full functionality would return to the computing device.

The current standard for hot swapping add-on cards from a PCI bus is defined by the so-called CompactPCI Hot Swap Specification. This standard was developed by a consortium, the PCI Industrial Computers Manufacturing Group (PICMG), and was made public in a release, PICMG 2.1 R1.0.

A corresponding prior art PCI hot swap bus comprises only one processor slot into which is plugged a processor card. Moreover, the processor card does not have any circuitry to enable it to be hot swapped. Therefore, the processor card cannot be hot swapped when it breaks down. Being unable to hot swap the processor card of the prior art is a severe drawback that leads to expensive downtimes in systems where any downtime at all is considered intolerable.

US 5,781,767 A describes several host adaptor packages connected to a common bus. The host adaptor packages communicate via a maintenance LAN with a bus topology. The maintenance LAN is a part of a main backplane which is common not only to the host adapter packages but also to cache packages and disc adaptor packages.

This in mind, the present invention aims at providing a corresponding processor card and bus for hot swapping to prevent downtimes in systems.

This is achieved by a processor card according to claim 1 and a bus according to claim 11. The dependent claims pertain to corresponding further developments and improvements.

As will be seen more clearly from the detailed description following below, the claimed processor card utilizes signal switching circuitry thus enabling the processor card to be hot swapped. Accordingly, downtimes in systems can be prevented.

In the following, the invention is further illustrated by way of example, taking reference to the accompanying drawings. Thereof
Fig.1 is a function block diagram of a prior art PCI hot swap bus, and
Fig.2 is a function block diagram of a PCI hot swap bus according to the present invention.

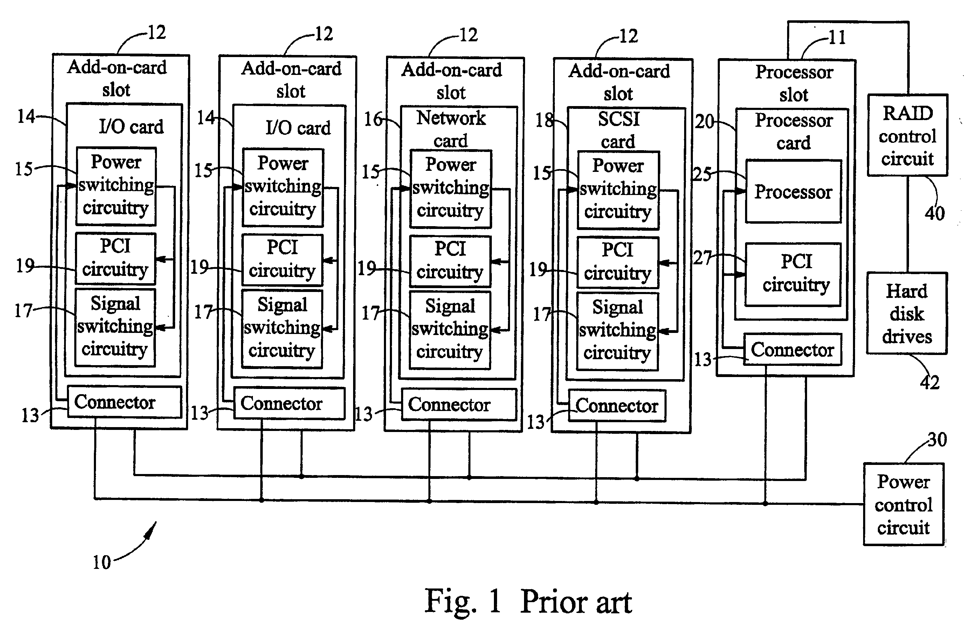

The prior art PCI hot swap bus 10 shown in Fig. 1 is used as a server that controls a RAID hard disk array. The PCI hot swap bus 10 comprises a processor slot 11 into which is plugged a processor card 20, and a plurality of add-on-card slots 12 into which are plugged various add-on cards. Some of the add-on cards may be I/O cards 14 that establish communications with external devices, such as modems. Other add-on cards may be network cards 16 to establish communications across a network, or SCSI cards 18 to communicate with SCSI devices. Other types of cards may, of course, be plugged into the bus 10. Each card is connected to a corresponding slot via a connector 13. Excepting the processor card 20, every card on the PCI hot swap bus 10 comprises power switching circuitry 15, signal switching circuitry 17, and PCI circuitry 19 dedicated to fulfilling the specific functionality of the card. The power switching circuitry 15 is used to individually control power to each card. The power switching circuitry 15 may be manually controlled, or may be controlled by another device on the bus 10, such as the processor card 20. The signal switching circuitry 17 is used to electrically connect and disconnect the card from signal lines of the bus 10. The signal switching circuitry 17 is of critical importance when hot swapping a card, as it prevents transients from disrupting other cards on the bus 10, and performs appropriate hardware interfacing protocol functions when an add-on card is being inserted into, or pulled from, an add-on-card slot 12.

The processor card 20, however, is special in the prior art PCI hot swap bus 10. It has neither power switching circuitry nor signal switching circuitry. Instead, it has a processor 25 and PCI circuitry 27. The PCI circuitry 27 interfaces the processor 25 with the PCI hot swap bus 10, and also improves the fan-out capabilities of the processor card 20, allowing it to interface with more add-on cards on the bus 10. In this example, the processor card 20 is used to control a RAID control circuit 40 for an array of hard disk drives 42. The RAID control circuit 40 controls the hard disk drives 42 to fetch and store information.

Finally, a power control circuit 30 supplies power to the PCI hot swap bus 10, and it is from this power control circuit 30 that each of the cards in their respective slots 11, 12 obtains electrical power.

Although all the add-on cards 14, 16 and 18 may be hot swapped from their add-on-card slots 12, the processor card 20 is, again, an exception. Because the processor card 20 lacks both the signal switching circuitry and the power switching circuitry of the other cards, it cannot be hot swapped from the processor slot 11. It lacks the necessary hardware to conform to the PCI hot swap specifications. Moreover, hot swapping a processor card 20 is generally considered impossible because the processor card 20 usually controls many of the signal lines 10 on the bus that the other cards require to function properly.

Nevertheless, being unable to hot swap the processor card 20 of the prior art is a severe drawback that leads to expensive downtimes in systems where any downtime at all is considered intolerable.

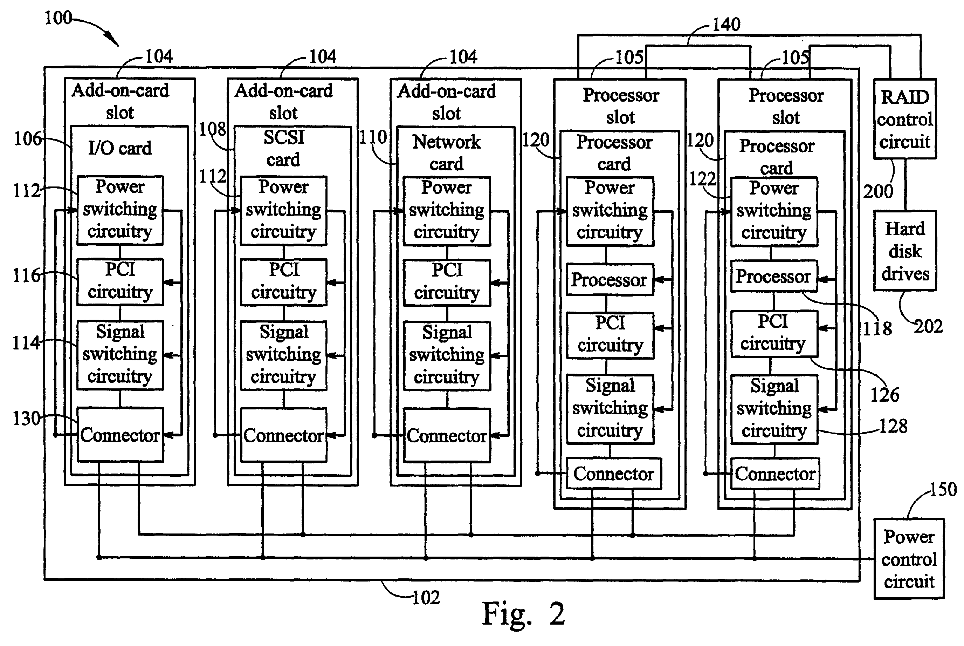

Please refer to Fig.2. Fig.2 is a function block diagram of a PCI hot swap bus 100 according to the present invention. The PCI hot swap bus 100 conforms to specifications outlined in PICMG 2.1 R1.0. This document can be obtained from the PCI Special Interest Group, or from PICMG. The PCI hot swap bus 100 is setup on a backplane 102. The backplane 102 has a plurality of add-on-card slots 104 and two processor slots 105 that are electrically connected together via the PCI hot swap bus 100. Various types of hot swappable add-on cards plug into the add-on-card slots 104, such as I/O cards 106 to communicate with external devices (like modems), SCSI cards 108 to communicate with SCSI devices (like hard disks), or network cards 110 to establish network communications with other devices. Also, two processor cards 120 plug into the processor slots 105. Each of the add-on cards 106, 108, 110 and processor cards 120 plugs into its slot 104, 105 using a connector 130 that is installed on the card so that PCI signal lines on the PCI hot swap bus 100 connect to their appropriate signal lines on the card.

Every add-on card on the backplane 102 has power switching circuitry 112, signal switching circuitry 114, and PCI circuitry 116 to fulfill the functionality requirements of the card. The signal switching circuitry 114 electrically connects to the connector 130. Each processor card 120 has power switching circuitry 122, signal switching circuitry 128, and PCI circuitry 126. The signal switching circuitry 128 electrically connects to the connector 130. In addition to this, each processor card 120 has a processor 118. The PCI circuitry 126 on the processor card 120 has functionality that is additional to that of the other cards 106, 108, 110.

A power control circuit 150 plugs into the backplane 102 to supply power to the slots 104, 105, and thus to the cards within the slots 104, 105. The power switching circuitry 112, 122 on each card permits power to be selectively delivered to the card. This power switching circuitry 112, 122 can be both manually controlled to turn a card on or off, and it may also be remotely controlled by other cards on the PCI hot swap bus 100 to turn the card off. Specifically, the processor cards 120 can control the power switching circuitry 112, 122 of the other cards to turn the cards off. The power switching circuitry 112, 122 on each card receives power through its corresponding connector 130 and delivers power to all of the other components on the card, such as to the signal switching circuitry 114, 128, the PCI circuitry 116, 126, and to the processor 118 if the card is a processor card 120.

The signal switching circuitry 114, 128 on each card conforms the card to the PCI hot swap specifications. The signal switching circuitry 114, 128 ensures that the card may be plugged into, and removed from, its slot 104, 105 without disrupting the operations of other devices on the PCI hot swap bus 100. Additionally, the signal switching circuitry 114, 128 performs the PCI hot swap bus protocols that informs other devices on the PCI hot swap bus 100 that the card is being removed from, or added to, the PCI hot swap bus 100. The PCI circuitry 126 on each processor card 120 functions to interface the processor 118 with the PCI bus 100.

To serve as an example of use for the present invention, each processor card 120 is connected to a RAID control circuit 200 to control the RAID control circuit 200. The RAID control circuit 200, in turn, controls an array of hard disk drives 202. By sending commands to the RAID control circuit 200, the processor cards 120 can read and write information to the hard disk drives 202. Hence, the processor cards 120 are plugged into the backplane 102 of a server.

In addition, each processor card 120 is connected to the other processor card 120 via a communications line 140. The communications line 140 is independent of the PCI hot swap bus 100, and thus the processor cards 120 do not need to use the PCI hot swap bus 100 to communicate with each other. This communications line 140 may be of any sort, preferably using a standard port. Examples include using a local area networking (LAN) connection, a serial connection (such as RS-232), a universal serial bus (USB) connection, or a fiber channel connection. The processors 118 are in continuous communication with each other through the communication line 140. The communications line 140 may be implemented in either a processor slot 105 to processor slot 105 manner, or in a processor card 120 to processor card 120 manner via a cable (not shown) .

When power is delivered to the backplane 102 and all of the cards in their slots 104, 105 come online, in the present invention PCI hot swap bus 100 only one of the processor cards 120 actually connects to the bus 100 via its signal switching circuitry 128. The second processor card 120 sets its signal switching circuitry 128 so that it is electrically disconnected from the PCI hot swap bus 100. Consequently, the first processor card 120 becomes the main processor, controlling the RAID control circuit 200 of the server. The second processor card 120 stands idle. The first processor card 120 remains, however, in communication with the second processor card 120 via the communications line 140, and periodically informs the second processor card 120 of its health, that is, of the perceived health of the first processor card 120. Furthermore, the health of the first processor card 120 may be actively monitored by the second processor card 120.

In the event that the first processor card 120 detects a malfunction in its operations, it immediately informs the second processor card 120. The second processor card 120 then instructs its signal switching circuitry 128 to connect to the bus 100, while simultaneously the first processor card 120 instructs its signal switching circuitry 128 to disconnect from the bus 100. Thus, the second processor card 120 takes over operations from the first processor card 120. An operator can then come to swap out the defective first processor card 120 with a new processor card 120. In the meantime, operations continue on the server without interruption or even any loss of data by way of the second processor card 120, as the second processor card can also control the RAID control circuit 200.

Alternatively, the second processor card 120 may control the signal switching circuit 128 of the first processor card 120 to disconnect the first processor card 120 from the bus 100 if the second processor card 120 determines that the first processor card 120 has malfunctioned. As above, at the same time the second processor card 120 causes its signal switching circuitry 128 to connect to the bus 100 so that the second processor card 120 can take over operations of the server. The second processor card 120 may even cause the power switching circuitry 122 of the first processor card 120 to simply turn the first processor card 120 off completely. Such an event may occur under instructions to the second processor card 120 from an operator when the first processor card 120 has suffered a catastrophic failure that so cripples it that it is unable to communicate with the second processor card 120. Indeed, any prolonged period of silence on the communications line 140 from the first processor card 120 to the second processor card 120 may be construed by the second processor card 120 as just such a failure. Of course, the first processor card 120 can also monitor and control the second processor card 120 in exactly the same manner.

By using two processor cards 120 with signal switching circuitry 128 and power switching circuitry 122, and by maintaining communications between the processor cards 120, the present invention PCI hot swap bus 100 can successfully hot swap either one of the processor cards 120. This provides component redundancy that successfully avoids any downtime of the computing device, thus saving money and preventing costly losses of data for systems where downtime cannot be tolerated.

In contrast to the prior art, the present invention processor card uses signal switching circuitry and power switching circuitry to conform to PCI hot swap specifications. By using a dedicated communications line to communicate with a similar processor card on the bus, either one of the processor cards may take control of the bus while the other disconnects from the bus. The disconnected processor card can then be swapped out of the bus and replaced with a new processor card.

## Claims

1. A processor card (120) for a hot swap bus (100), the processor card (120) plugging into a processor slot (105) of the hot swap bus (100) and comprising:
a connector (130) for plugging into the processor slot (105),
a processor (118) electrically connected to the connector (130),
signal switching circuitry (128) for connecting signal lines on the processor card (120) to signal lines of the hot swap bus (100), the signal switching circuitry (128) electrically connected to the processor (118) and the connector (130) and enabling the processor card (120) to be hot swapped so that the processor card (120) can be hot swapped into the hot swap bus (100) by plugging the connector (130) into the processor slot (105), and hot swapped out of the hot swap bus (100) by unplugging the connector (130) from the processor slot (105), and
power switching circuitry (122) for controlling power to the processor card (120),
**characterized in that** the processor card further comprises means for a point-to-point connection to another processor card (120).

2. The processor card (120) of claim 1 wherein the processor card (120) uses a PCI bus architecture.

3. The processor card (120) of claim 2 further comprising PCI circuitry (126), the PCI circuitry (126) enabling the processor card (120) to interface with a greater number of devices on the PCI bus (100).

4. The processor card (120) of claim 1 wherein the processor card (120) plugs into a backplane (102) of an electrical device.

5. The processor card (120) of claim 1 wherein the processor card (120) is a first processor card (120) that communicates with a second processor card (120) using a communications line (140).

6. The processor card (120) of claim 5 wherein the communications line (140) is a local area network (LAN) cable, a serial cable, a universal serial bus (USB) cable, or a fiber channel cable.

7. The processor card (120) of claim 5 wherein the second processor card (120) can be plugged into the hot swap bus (100).

8. The processor card (120) of claim 7 wherein the second processor card (120) can control the signal switching circuitry (128) of the first processor card (120) to electrically disconnect the first processor card (120) from the bus (100).

9. The processor card (120) of claim 8 wherein the first processor card (120) can be hot swapped from the bus (100) after the signal switching circuitry (128) of the first processor card (120) has electrically disconnected the first processor card (120) from the bus (100).

10. The processor card (120) of claim 7 wherein the second processor card (120) can control the power switching circuitry (122) of the first processor card (120) to turn off or turn on the first processor card (120).

11. A hot swap bus (100) comprising:
a first processor card (120) and a second processor card (120), the first processor card (120) plugging into a first processor slot (105) on the hot swap bus (100), the second processor card (120) plugging into a second processor slot (105) on the hot swap bus (100), the first processor card (120) and the second processor card (120) each comprising:
a connector (130) for plugging into the first processor slot (105) or the second processor slot (105), the processor card (120) being hot swapped into the hot swap bus (100) by plugging the connector (130) into the processor slot (105), and being hot swapped out of the hot swap bus (100) by unplugging the connector (130) from the processor slot (105),
signal switching circuitry (128) for connecting signal lines on the processor card (120) to signal lines of the hot swap bus (100), the signal switching circuitry (128) electrically connected to the connector (130) and enabling the processor card (120) to be hot swapped,
a processor (118) electrically connected to the signal switching circuitry (128), and
power switching circuitry (122) for controlling power to the processor card (120),
**characterized in that** the hot swap bus further comprises an independent communications line (140) connecting the first and second processor cards (120) in a point-to-point topology that permits the first processor card (120) and the second processor card (120) to communicate with each other.

12. The hot swap bus (100) of claim 11 wherein the bus (100) uses a PCI architecture.

13. The hot swap bus (100) of claim 12 wherein each processor card (120) further comprises PCI circuitry (126), the PCI circuitry (126) enabling each processor card (120) to interface with a greater number of devices on the PCI bus (100).

14. The hot swap bus (100) of claim 11 wherein each processor card (120) plugs into a backplane (102) of an electrical device.

15. The hot swap bus (100) of claim 11 wherein the communications line (140) is a local area network (LAN) cable, a serial cable, a universal serial bus (USB) cable, or a fiber channel cable.

16. The hot swap bus (100) of claim 11 wherein the second processor card (120) can control the signal switching circuitry (128) of the first processor card (120) to electrically disconnect the first processor card (120) from the bus (100).

17. The hot swap bus (100) of claim 16 wherein the first processor card (120) is hot swapped from the bus (100) after the signal switching circuitry (128) of the first processor card (120) has electrically disconnected the first processor card (120) from the bus (100).

18. The hot swap bus (100) of claim 11 wherein the second processor card (120) can control the power switching circuitry (122) of the first processor card (120) to turn off or turn on the first processor card (120).

## Patentansprüche

1. Prozessorkarte (120) für einen Hot-Swap-Bus (100), wobei die Prozessorkarte (120) in einen Prozessor-Slot (105) des Hot-Swap-Busses (100) gesteckt wird und Folgendes aufweist:
einen Stecker (130) zum Einstecken in den Prozessor-Slot (105),
einen Prozessor (118), der mit dem Stecker (130) elektrisch verbunden ist,
einen Signalschaltkreis (128) zum Verbinden der Signalleitungen auf der Prozessorkarte (120) mit Signalleitungen des Hot-Swap-Busses (100), wobei der Signalschaltkreis (128) mit dem Prozessor (118) und dem Stecker (130) elektrisch verbunden ist und das Austauschen der Prozessorkarte (120) im Betrieb erlaubt, so dass die Prozessorkarte (120) im Betrieb in den Hot-Swap-Bus (100) durch Stecken des Steckers (130) in den Prozessor-Slot (105) eingesetzt werden kann und durch Herausziehen des Steckers (130) aus dem Prozessor-Slot (105) im Betrieb aus dem Hot-Swap-Bus (100) entfernt werden kann, und
einen Leistungsschaltkreis (122) zum Regeln der Stromzufuhr zu der Prozessorkarte (120), **dadurch gekennzeichnet, dass** die Prozessorkarte ferner Mittel zur Punkt-zu-Punkt-Verbindung mit einer weiteren Prozessorkarte (120) aufweist.

2. Prozessorkarte (120) nach Anspruch 1, wobei die Prozessorakrte (120) eine PCI-Bus-Architektur nutzt.

3. Prozessorkarte (120) nach Anspruch 2, die ferner einen PCI-Schaltkreis (126) aufweist, wobei der PCI-Schaltkreis (126) den Anschluss der Prozessorkarte (120) an eine größere Zahl von Vorrichtungen auf dem PCI-Bus (100) erlaubt.

4. Prozessorkarte (120) nach Anspruch 1, wobei die Prozessorkarte (120) in eine Rückwand (102) eines elektrischen Geräts gesteckt wird.

5. Prozessorkarte (120) nach Anspruch 1, wobei die Prozessorkarte (120) eine erste Prozessorkarte (120) ist, die mit Hilfe einer Übertragungsleitung (140) mit einer zweiten Prozessorkarte (120) kommuniziert.

6. Prozessorkarte (120) nach Anspruch 5, wobei die Übertragungsleitung (140) ein LAN-Kabel, ein serielles Kabel, ein USB-Kabel oder ein Fiber-Channel-Kabel ist,

7. Prozessorkarte (120) nach Anspruch 5, wobei die zweite Prozessorkarte (120) in den Hot-Swap-Bus (100) gesteckt werden kann.

8. Prozessorkarte (120) nach Anspruch 7, wobei die zweite Prozessorkarte (120) den Signalschaltkreis (128) der ersten Prozessorkarte (120) steuern kann, um die erste Prozessorkarte (120) von dem Bus (100) elektrisch zu trennen.

9. Prozessorkarte (120) nach Anspruch 8, wobei die erste Prozessorkarte (120) im Betrieb aus dem Bus (100) entfernt werden kann, nachdem der Signalschaltkreis (128) der ersten Prozessorkarte (120) die erste Prozessorkarte (120) von dem Bus (100) elektrisch getrennt hat.

10. Prozessorkarte (120) nach Anspruch 7, wobei die zweite Prozessorkarte (120) den Leistungsschaltkreis (122) der ersten Prozessorkarte (120) steuern kann, um die erste Prozessorkarte (120) ein- oder auszuschalten.

11. Hot-Swap-Bus (100), der Folgendes aufweist:
eine erste Prozessorkarte (120) und eine zweite Prozessorkarte (120), wobei die erste Prozessorkarte (120) in einen ersten Prozessor-Slot (105) an dem Hot-Swap-Bus (100) gesteckt wird, die zweite Prozessorkarte (120) in einen zweiten Prozessor-Slot (105) an dem Hot-Swap-Bus (100) gesteckt wird, und die erste Prozessorkarte (120) und die zweite Prozessorkarte (120) jeweils Folgendes aufweist:
einen Stecker (130) zum Einstecken in den ersten Prozessor-Slot (105) oder den zweiten Prozessor-Slot (105), wobei die Prozessorkarte (120) im Betrieb in den Hot-Swap-Bus (100) eingesetzt wird, indem der Stecker (130) in den Prozessor-Slot (105) gesteckt wird, und im Betrieb aus dem Hot-Swap-Bus (100) entfernt wird, indem der Stecker (130) aus dem Prozessor-Slot (105) herausgezogen wird,
einen Signalschaltkreis (128) zum Verbinden der Signalleitungen auf der Prozessorkarte (120) mit Signalleitungen des Hot-Swap-Busses (100), wobei der Signalschaltkreis (128) mit dem Stecker (130) elektrisch verbunden ist und den Austausch der Prozessorkarte (120) im Betrieb erlaubt,
einen Prozessor (118), der mit dem Signalschaltkreis (128) elektrisch verbunden ist, und
einen Leistungsschaltkreis (122) zum Regeln der Stromzufuhr zu der Prozessorkarte (120), **dadurch gekennzeichnet, dass** der Hot-Swap-Bus ferner eine unabhängige Übertragungsleitung (140) aufweist, welche die erste und die zweite Prozessorkarte (120) in einer Punkt-zu-Punkt-Topologie verbindet, die es erlaubt, dass die erste Prozessorkarte (120) und die zweite Prozessorkarte (120) miteinander kommunizieren.

12. Hot-Swap-Bus (100) nach Anspruch 11, wobei der Bus (100) eine PCI-Architektur nutzt.

13. Hot-Swap-Bus (100) nach Anspruch 12, wobei jede Prozessorkarte (120) ferner einen PCI-Schaltkreis (126) aufweist, wobei der PCI-Schaltkreis (126) den Anschluss jeder Prozessorkarte (120) an eine größere Zahl von Vorrichtungen auf dem PCI-Bus (100) erlaubt.

14. Hot-Swap-Bus (100) nach Anspruch 11, wobei jede Prozessorkarte (120) in eine Rückwand (102) eines elektrischen Geräts gesteckt wird.

15. Hot-Swap-Bus (100) nach Anspruch 11, wobei die Übertragungsleitung (140) ein LAN-Kabel, ein serielles Kabel, ein USB-Kabel oder ein Fiber-Channel-Kabel ist.

16. Hot-Swap-Bus (100) nach Anspruch 11, wobei die zweite Prozessorkarte (120) den Signalschaltkreis (128) der ersten Prozessorkarte (120) steuern kann, um die erste Prozessorkarte (120) von dem Bus (100) elektrisch zu trennen.

17. Hot-Swap-Bus (100) nach Anspruch 16, wobei die erste Prozessorkarte (120) im Betrieb aus dem Bus (100) entfernt wird, nachdem der Signalschaltkreis (128) der ersten Prozessorkarte (120) die erste Prozessorkarte (120) von dem Bus (100) elektrisch getrennt hat.

18. Hot-Swap-Bus (100) nach Anspruch 11, wobei die zweite Prozessorkarte (120) den Leistungsschaltkreis (122) der ersten Prozessorkarte (120) steuern kann, um die erste Prozessorkarte (120) ein- oder auszuschalten.

## Revendications

1. Carte processeur (120) pour un bus à échange sous tension (100), la carte processeur (120) se branchant dans un socle de processeur (105) du bus à échange sous tension (100) et comprenant :
un connecteur (130) pour se brancher dans le socle de processeur (105),
un processeur (118) électriquement connecté au connecteur (130),
des circuits de commutation de signaux (128) pour connecter des lignes à signaux sur la carte processeur (120) à des lignes à signaux du bus à échange sous tension (100), les circuits de commutation de signaux (128) étant électriquement connectés au processeur (118) et au connecteur (130) et permettant d'échanger la carte processeur (120) sous tension de sorte que la carte processeur (120) peut être entrée sous tension dans le bus à échange sous tension (100) en branchant le connecteur (130) dans le socle de processeur (105) et sortie sous tension du bus à échange sous tension (100) en sortant le connecteur (130) hors du socle de processeur (105), et
des circuits de commutation de puissance (122) pour commander la puissance vers la carte de processeur (120),
**caractérisée en ce que** la carte processeur comprend en outre des moyens pour établir une connexion point-à-point avec une autre carte processeur (120).

2. Carte processeur (120) selon la revendication 1, dans laquelle la carte processeur (120) utilise une architecture de bus PCI.

3. Carte processeur (120) selon la revendication 2, comprenant en outre des circuits PCI (126), les circuits PCI (126) permettant à la carte processeur (120) de réaliser une interface avec un grand nombre de dispositifs sur le bus PCI (100).

4. Carte processeur (120) selon la revendication 1, dans laquelle la carte processeur (120) se loge dans un fond de panier (backplane) (102) d'un dispositif électrique.

5. Carte processeur (120) selon la revendication 1, dans laquelle la carte processeur (120) est une première carte processeur (120) qui communique avec une seconde carte processeur (120) en utilisant une ligne de communication (140).

6. Carte processeur (120) selon la revendication 5, dans laquelle la ligne de communication (140) est un câble de réseau local (LAN), un câble série, un câble de bus série universel (USB), ou un câble de type "fibre channel".

7. Carte processeur (120) selon la revendication 5, dans laquelle la seconde carte processeur (120) peut être logée dans le bus à échange sous tension (100).

8. Carte processeur (120) selon la revendication 7, dans laquelle la seconde carte processeur (120) peut commander les circuits de commutation de signaux (128) de la première carte processeur (120) à déconnecter électriquement la première carte processeur (120) vis-à-vis du bus (100).

9. Carte processeur (120) selon la revendication 8, dans laquelle la première carte processeur (120) peut être échangée sous tension depuis le bus (100) après que le circuit de commutation de signaux (128) de la première carte processeur (120) ait déconnecté électriquement la première carte processeur (120) vis-à-vis du bus (100).

10. Carte processeur (120) selon la revendication 7, dans laquelle la seconde carte processeur (120) peut commander les circuits de commutation de puissance (122) de la première carte processeur (120) pour mettre en marche ou à l'arrêt la première carte processeur (120).

11. Bus à échange sous tension (100) comprenant :
une première carte processeur (120) et une seconde carte processeur (120), la première carte processeur (120) se branchant dans un premier socle de processeur (105) sur le bus à échange sous tension (100), la seconde carte processeur (120) se branchant dans un second socle de processeur (105) sur le bus à échange sous tension (100), la première carte processeur (120) et la seconde carte processeur (120) comprenant chacune :
un connecteur (130) pour se brancher dans le premier socle de processeur (105) ou le second socle de processeur (105), la carte processeur (120) étant entrée sous tension dans le bus à échange sous tension (100) en branchant le connecteur (130) dans le socle de processeur (105), et étant sortie sous tension du bus à échange sous tension (100) en débranchant le connecteur (130) hors du socle de processeur (105),
des circuits de commutation de signaux (128) pour connecter des lignes à signaux sur la carte processeur (120) à des lignes à signaux du bus à échange sous tension (100), les circuits de commutation de signaux (128) étant électriquement connectés au connecteur (130) et permettant l'échange sous tension de la carte processeur (120),
un processeur (118) électriquement connecté aux circuits de commutation de signaux (128), et
un circuit de commutation de puissance (128) pour commander la puissance vers la carte processeur (120),
**caractérisé en ce que** le bus à échange sous tension comprend encore une ligne de communication indépendante (140) qui connecte la première carte processeur et la seconde carte processeur (120) dans une topologie point-à-point qui permet à la première carte processeur (120) et à la seconde carte processeur (120) de communiquer l'une avec l'autre.

12. Bus à échange sous tension (100) selon la revendication 11, dans lequel le bus (100) utilise une architecture PCI.

13. Bus à échange sous tension (100) selon la revendication 12, dans lequel chaque carte processeur (120) comprend encore des circuits PCI (126), les circuits PCI (126) permettant à chaque carte processeur (120) de faire une interface avec un grand nombre de dispositifs sur le bus PCI (100).

14. Bus à échange sous tension (100) selon la revendication 11, dans lequel chaque carte processeur (120) se branche dans un fond de panier (backplane) (102) d'un dispositif électrique.

15. Bus à échange sous tension (100) selon la revendication 11, dans lequel la ligne de communication (140) est un câble de réseau local (LAN), un câble série, un câble de bus série universel (USB) ou un câble dit "fibre channel".

16. Bus à échange sous tension (100) selon la revendication 11, dans lequel la seconde carte processeur (120) peut commander les circuits de commutation de signaux (128) de la première carte processeur (120) pour déconnecter électriquement la première carte processeur (120) depuis le bus (100).

17. Bus à échange sous tension (100) selon la revendication 16, dans lequel la première carte processeur (120) est sortie sous tension du bus (100) après que les circuits de commutation de signaux (128) de la première carte processeur (120) ont déconnecté électriquement la première carte processeur (120) depuis le bus (100).

18. Bus à échange sous tension (100) selon la revendication 11, dans lequel la seconde carte processeur (120) est capable de commander les circuits de commutation de puissance (122) de la première carte processeur (120) pour mettre en marche ou à l'arrêt la première carte processeur (120).
